# EUROPEAN PATENT APPLICATION

(11) **EP 2 555 298 A1**
(43) Date of publication of application: **06.02.2013**
(21) Application number: 11762262.1
(22) Date of filing: 30.03.2011
(51) Int. Cl.: H01M 8/04, H01M 8/10

(54) **FUEL CELL SYSTEM AND METHOD FOR DRIVING SAME**

(30) Priority: 30.03.2010 JP 2010078397
(71) Applicant: Panasonic Corporation, Kadoma-shi Osaka 571-8501 (JP)
(72) Inventor: UMEDA, Takahiro, Osaka 540-6207 (JP); KUSAKABE, Hiroki, Osaka 540-6207 (JP); YASUMOTO, Eiichi, Osaka 540-6207 (JP); UNOKI, Shigeyuki, Osaka 540-6207 (JP); SUGAWARA, Yasushi, Osaka 540-6207 (JP); SHIBATA, Soichi, Osaka 540-6207 (JP); SAKAI, Osamu, Osaka 540-6207 (JP)
(74) Representative: Grünecker, Kinkeldey, Stockmair & Schwanhäusser
(86) International application number: PCT/JP2011/001902
(87) International publication number: WO 2011/122019

(57) **Abstract**

A controller (15) performs a stop operation of stopping electric power generation by a fuel cell (3); then performs an activity recovery operation of stopping the supply of a fuel gas by a fuel gas supply unit (10) to an anode (2a), causing an anode inert gas supply unit (13) to supply an inert gas to the anode (2a), and causing an oxidizing gas supply unit (11) to supply an oxidizing gas to a cathode (2b); and performs control such that the fuel gas supply unit (10) resumes supplying the fuel gas to the anode (2a) to resume the electric power generation by the fuel cell (3) after the cell voltage of the fuel cell (3) which is detected by a voltage detector (14) has decreased to a first voltage or lower.

## Description

### Technical Field

The present invention relates to a fuel cell system with improved durability, which is configured to suppress fuel cell degradation caused by impurities, and to an operation method of the fuel cell system.

### Background Art

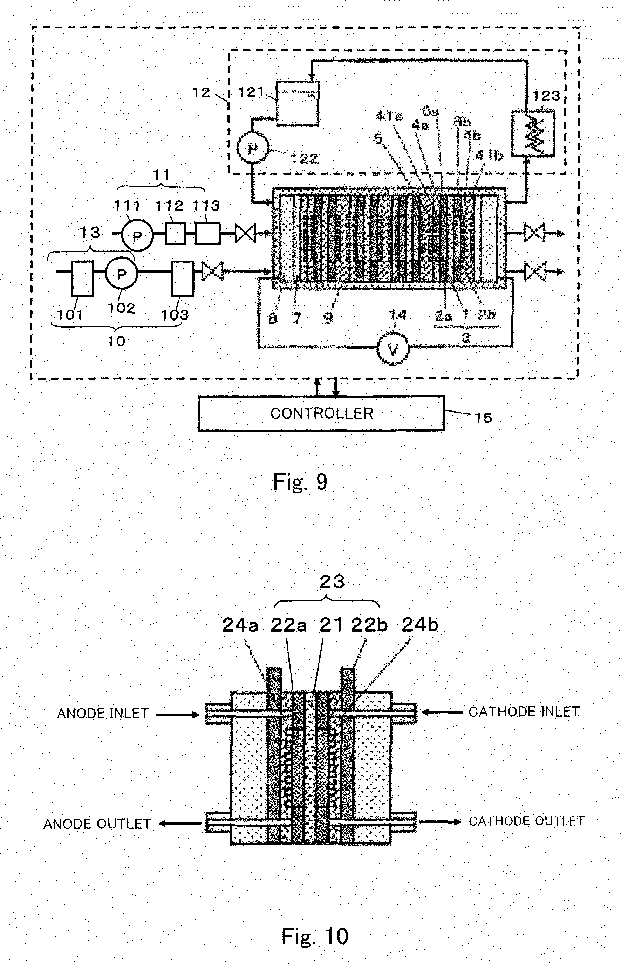

As shown in Fig. 10, a conventional general fuel cell system includes a stack. The stack is formed by stacking a plurality of fuel cells 23, each of which includes an anode 22a and a cathode 22b. The anode 22a and the cathode 22b are arranged such that they are opposed to each other with an electrolyte 21 interposed between them. The anode 22a is supplied with a fuel gas and the cathode 22b is supplied with an oxidizing gas.

The fuel gas and the oxidizing gas are supplied to the anode 22a and the cathode 22b through a separator 24a and a separator 24b, respectively, the separator 24a including a gas channel for the fuel gas and the separator 24b including a gas channel for the oxidizing gas.

A fuel gas supply unit configured to supply the fuel gas to an anode inlet, and an oxidizing gas supply unit configured to supply the oxidizing gas to a cathode inlet, are connected to the stack configured in the above manner. A controller performs control such that electric power generation is in a desired state.

In order to popularize such a fuel cell system, the fuel cell system is required to have long-term durability such as 10-year durability and the cost of the fuel cell system needs to be lowered. Meanwhile, regarding this type of conventional fuel cell system, there is a case where the system is affected by various impurities and thereby its cell voltage, power generation efficiency, and durability become decreased. A conceivable method for improving the durability in a case where the system is affected by impurities is to increase the amount of catalysts (e.g., platinum-based catalysts) used in the anode and the cathode of the fuel cell. This is, however, unfavorable in terms of lowering the cost of the system.

The impurities include internal impurities that occur from components of the fuel cell system such as resin components and metal components, and external impurities that enter the system from the outside, for example, from the atmosphere. There is a risk that these impurities poison the anode 22a and the cathode 22b, thereby causing a decrease in catalytic activities at the anode 22a and the cathode 22b, resulting in a decrease in the cell voltage of the fuel cell 23.

In relation to a conventional fuel cell system, there is a disclosed technique (see Embodiment 2 of Patent Literature 1, for example) intended particularly for eliminating influences of impurities such as CO which poisons a platinum-based catalyst of the anode 22a. In this technique, for example, when the cell voltage of the fuel cell 23 has become 0.6 V or lower, the supply of the fuel gas by the fuel gas supply unit is temporarily stopped while electric power generation by the fuel cell 23 is continued in a constant current discharging state, and the electrode potential of the anode 22a is increased to 0.3 V or higher at which CO adsorbed to the anode 22a is electrochemically oxidized, and thereby CO adsorbed to the anode 22a is removed through oxidation.

### Citation List

### Patent Literature

PTL 1: Japanese Patent No. 3536645

### Summary of Invention

### Technical Problem

However, in the method used by the above conventional fuel cell system, in which the electrode potential of the anode is increased after the cell voltage of the fuel cell has decreased due to accumulation of impurities at the anode, there is a problem that the fuel cell gradually degrades and its durability decreases since the following cycle is repeated: impurities are accumulated at the anode to such an extent as to cause a decrease in the cell voltage; and thereafter catalytic activity is recovered.

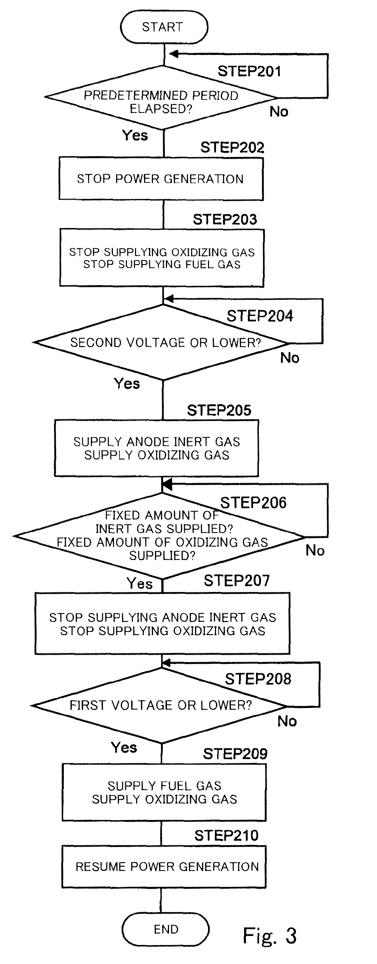

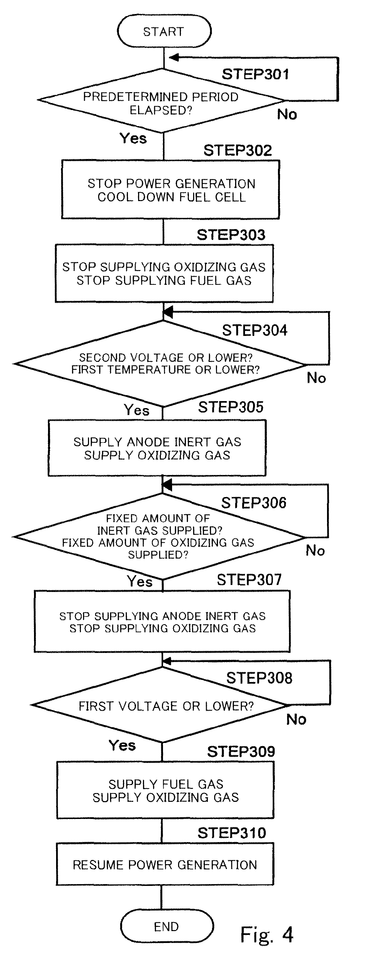

For example, Patent Literature 1 discloses the following technique: while in operation, impurities such as CO adsorbed to the surface of the fuel electrode are removed through oxidation by temporarily stopping fuel supply to the electrode of the fuel cell (see paragraph 0035). Specifically, Patent Literature 1 discloses that, when the fuel cell is in the state of discharging a constant current, the fuel supply is stopped if the cell voltage falls below 0.6 V. Then, the fuel supply is resumed when the cell voltage has become 0.1 V (see, for example, paragraphs 0026, 0030, 0032, Fig. 3, and Fig. 4).

However, it is considered that there is still room for improvements in the impurity removal technique of Patent Literature 1 in terms of suppressing anode degradation in the case of removing impurities from the anode through oxidation by increasing the electrode potential of the anode.

The present invention solves the above conventional problems, and an object of the present invention is to provide a fuel cell system with excellent durability, which removes impurities adsorbed to the anode more assuredly and suppresses fuel cell degradation.

### Solution to Problem

As a result of diligent studies, the inventors of the present invention have found a problem that there is a case where fuel cell degradation progresses due to impurities but almost no voltage drop of the fuel cell is observed since the impurities do not greatly contribute to voltage drop.

Specifically, if impurities are accumulated at the anode of a fuel cell and react with oxygen that cross-leaks from the cathode, and thereby hydrogen peroxide is produced at the anode side, then a chemical reaction occurs and a radical species with an extremely strong oxidizing power is formed at the anode side. If an electrolyte membrane and a catalyst layer, each of which contains a resin, stay in contact with the radical species for a long period of time, the resin gradually decomposes and degrades. At the time, however, the cell voltage of the fuel cell does not necessary decrease. Conventional fuel cell systems are unable to sufficiently remove impurities from the anode in a case where almost no voltage drop is observed.

The inventors of the present invention have found that particularly in a case where the amount of platinum used at the anode is reduced for the purpose of reducing the cost of the fuel cell, the above problem becomes more significant and there is still room for improvements in terms of the durability of the fuel cell.

In order to solve the above-described conventional problems, a fuel cell system according to the present invention includes: a fuel cell including an anode and a cathode; a fuel gas supply unit; an oxidizing gas supply unit; an anode inert gas supply unit; a voltage detector; and a controller. The controller: performs a stop operation of stopping electric power generation by the fuel cell; then performs an activity recovery operation of stopping the supply of the fuel gas by the fuel gas supply unit to the anode, causing the anode inert gas supply unit to supply the inert gas to the anode, and causing the oxidizing gas supply unit to supply the oxidizing gas to the cathode; and performs control such that the fuel gas supply unit resumes supplying the fuel gas to the anode to resume the electric power generation by the fuel cell after the cell voltage of the fuel cell which is detected by the voltage detector has decreased to a first voltage or lower.

Accordingly, when a predetermined period has elapsed (e.g., each time a first period has elapsed, the first period being assumed to be a period over which impurities are accumulated in such an amount as not to affect degradation of the fuel cell), the electrode potential of the anode is increased and thereby the impurities are removed from the anode. Thus, degradation of the fuel cell can be suppressed.

Moreover, since the inside of an anode channel is replaced with the inert gas after the supply of the fuel gas is stopped, a fuel (hydrogen) concentration at the anode can be reduced and a time required for the electrode potential of the anode to increase sufficiently can be reduced. Thus, a time required for the electrode potential of the anode to increase sufficiently can be reduced, and impurities can be removed sufficiently from the anode while suppressing degradation of the anode. It should be noted that if it takes an excessively long time for the electrode potential of the anode to increase sufficiently, then even though impurities can be removed from the anode, there is a risk of, for example, oxidation of carbon supporting a catalyst of the anode, oxidation degradation of a resin, and elution due to oxidation of Ru, and thereby the anode may degrade.

### Advantageous Effects of Invention

According to the fuel cell system of the present invention, before impurities start affecting degradation of the fuel cell, the electric power generation by the fuel cell is stopped and the electrode potential of the anode is increased, and thereby the impurities can be removed from the anode. Thus, according to the present invention, a fuel cell system with excellent durability, which suppresses degradation of the fuel cell caused by impurities, can be obtained.

### Brief Description of Drawings

[Fig.1] Fig.1 shows a schematic configuration of a fuel cell system according to Embodiment 1 of the present invention.
[Fig. 2] Fig. 2 is a flowchart showing a sequence of operations by the system.
[Fig. 3] Fig. 3 is a flowchart showing a sequence of operations by a fuel cell system according to Embodiment 2 of the present invention.
[Fig. 4] Fig. 4 is a flowchart showing a sequence of operations by a fuel cell system according to Embodiment 3 of the present invention.
[Fig. 5] Fig. 5 is a characteristic diagram showing power generation characteristics of the system and changes in a fluorine ion concentration.
[Fig. 6] Fig. 6 is a flowchart showing a sequence of operations by a fuel cell system according to Embodiment 4 of the present invention.
[Fig. 7] Fig. 7 is a flowchart showing a sequence of operations by a fuel cell system according to Embodiment 5 of the present invention.
[Fig. 8] Fig. 8 is a flowchart showing a sequence of operations by a fuel cell system according to Embodiment 6 of the present invention.
[Fig. 9] Fig. 9 shows a schematic configuration of a fuel cell system according to Embodiment 9 of the present invention.
[Fig. 10] Fig. 10 shows a schematic configuration of a conventional fuel cell system.

### Description of Embodiments

A first aspect of the present invention includes: a fuel cell including an anode and a cathode; a fuel gas supply unit configured to supply a fuel gas to the anode, the fuel gas containing at least hydrogen; an oxidizing gas supply unit configured to supply an oxidizing gas to the cathode, the oxidizing gas containing at least oxygen; an anode inert gas supply unit configured to supply an inert gas to the anode to replace the fuel gas, at least partially, with the inert gas; a voltage detector configured to detect a cell voltage of the fuel cell; and a controller configured to control operations of the fuel cell, the fuel gas supply unit, the oxidizing gas supply unit, and the anode inert gas supply unit. The controller: performs a stop operation of stopping electric power generation by the fuel cell; then performs an activity recovery operation of stopping the supply of the fuel gas by the fuel gas supply unit to the anode, causing the anode inert gas supply unit to supply the inert gas to the anode, and causing the oxidizing gas supply unit to supply the oxidizing gas to the cathode; and performs control such that the fuel gas supply unit resumes supplying the fuel gas to the anode to resume the electric power generation by the fuel cell after the cell voltage of the fuel cell which is detected by the voltage detector has decreased to a first voltage or lower.

According to this configuration, the electrode potential of the anode is increased not after the cell voltage of the fuel cell decreases but when a predetermined period has elapsed (e.g., each time a first period has elapsed, the first period being assumed to be a period over which impurities are accumulated in such an amount as not to affect degradation of the fuel cell). Accordingly, impurities can be removed from the anode and the cathode and degradation of the fuel cell can be suppressed even in a case where the impurities contribute to degradation of the fuel cell without causing voltage drop of the fuel cell.

Moreover, the electrode potential of the anode is increased not by directly supplying air to the anode but in the following indirect manner: the anode inert gas supply unit replaces, with the inert gas, the hydrogen-containing fuel gas that remains at the anode; and the oxidizing gas supply unit supplies air to the cathode, thereby causing oxygen in the air to cross-leak through an electrolyte membrane. Therefore, it is unnecessary to additionally include components for supplying air to the anode. This makes it possible to simplify the fuel cell system and to reduce the cost of the fuel cell system.

When the fuel gas at the anode is replaced with the inert gas and oxygen is supplied from the cathode to the anode through the electrolyte membrane, the electrode potential of the anode increases, and the apparent cell voltage (i.e., the potential difference between the anode and the cathode) becomes the first voltage (e.g., approximately 0.1 V) or lower. The cell voltage is detected by the voltage detector. When the cell voltage has become the first voltage, the supply of the fuel gas and the supply of the oxidizing gas are started, and thereby the electric power generation by the fuel cell is resumed. Therefore, oxygen is not supplied to the anode more than necessary. Thus, catalyst oxidation at the anode can be suppressed to the minimum.

Each time the first period, which is assumed to be a period over which impurities are accumulated in such an amount as not to affect degradation of the fuel cell, has elapsed, the electric power generation by the fuel cell is stopped and not only the electrode potential of the anode but also the electrode potential of the cathode are increased. In this manner, for example, residual impurities trapped within the fuel cell at the fabrication of the fuel cell, the residual impurities poisoning the anode and the cathode, or impurities occurring due to thermal decomposition or the like of components of the fuel cell during the operation of the fuel cell, can be removed through oxidation. Thus, a fuel cell system with excellent power generation efficiency and excellent durability in which voltage drop due to impurities is suppressed can be obtained.

In a second aspect of the present invention based on the first aspect, the controller: performs the stop operation such that the stop operation includes stopping the electric power generation by the fuel cell, stopping the supply of the oxidizing gas by the oxidizing gas supply unit to the cathode, and stopping the supply of the fuel gas by the fuel gas supply unit to the anode; and performs control to perform the activity recovery operation after the cell voltage of the fuel cell which is detected by the voltage detector has decreased to a second voltage or lower.

According to this configuration, after the stop of the electric power generation by the fuel cell and before the electrode potential of the anode and the electrode potential of the cathode are increased, the supply of the oxidizing gas to the cathode and the supply of the fuel gas to the anode are temporarily stopped, and in such a state, oxygen that remains at the cathode is reacted with hydrogen that cross-leaks from the anode, and thereby the remaining oxygen is consumed. In this manner, a catalyst at the electrode interface of the cathode is subjected to reduction, and thereby catalytic activity can be recovered.

At the time, oxygen at the catalyst interface of the cathode is eliminated, which causes the electrode potential of the cathode to decrease. As a result, the apparent cell voltage (the potential difference between the anode and the cathode) detected by the voltage detector decreases. When the cell voltage detected by the voltage detector has decreased to the second voltage or lower, at which voltage the catalytic activity of the cathode is sufficiently recovered, the inert gas is supplied by the anode inert gas supply unit to the anode in a fixed amount and the oxidizing gas is supplied by the oxidizing gas supply unit again to the cathode in a fixed amount. In this manner, the electrode potential of the anode and the electrode potential of the cathode are increased; the catalytic activity of the anode and the catalytic activity of the cathode are kept high; and impurities are removed through oxidation. As a result, a high cell voltage can be maintained for a long term, and thus a fuel cell system with excellent power generation efficiency and excellent durability can be obtained.

A third aspect of the present invention based on the first or second aspect includes: a cooling unit configured to cool the fuel cell; and a temperature detector configured to detect a temperature of the fuel cell. In the third aspect, the controller: performs the stop operation such that the stop operation includes stopping the electric power generation by the fuel cell and controlling the cooling unit to cool the fuel cell; and performs control to perform the activity recovery operation after the temperature of the fuel cell which is detected by the temperature detector has decreased to a first temperature or lower.

According to this configuration, the fuel cell is cooled down to a low temperature (the first temperature or lower). This facilitates condensation of moisture contained in the electrodes. If the moisture contained in the electrodes is condensed, then impurities adsorbed to the electrodes are dissolved into the condensation water. Accordingly, the impurities can be easily removed.

Steam contained in the fuel gas and oxidizing gas supplied during the electric power generation, and steam generated due to reactions, are cooled and condensed while the electric power generation by the fuel cell is stopped, and thereby condensation water is produced at the anode and the cathode. Among impurities such as residual impurities trapped within the fuel cell at the fabrication of the fuel cell or impurities occurring due to thermal decomposition or the like of components of the fuel cell during the operation of the fuel cell, water-soluble impurities are dissolved into the condensation water. The condensation water, which thus absorbs the impurities and is produced during the stopped period, can be discharged to the outside of the system together with the inert gas, or the oxidizing gas, which is supplied in the following step.

It should be noted that, in this case, the timing of stopping the electric power generation and the timing of performing the cooling need not be the same. For example, the electric power generation may be stopped first, and then the cooling may be performed after a second period (described below) has elapsed. Alternatively, the cooling may be performed first, and then the electric power generation may be stopped after the second period has elapsed.

A fourth aspect of the present invention based on the third aspect includes: the cooling unit configured to cool the fuel cell; and the temperature detector configured to detect the temperature of the fuel cell. In the fourth aspect, the controller: performs the stop operation such that the stop operation includes controlling the cooling unit such that the temperature of the fuel cell which is detected by the temperature detector becomes the first temperature or lower, causing the fuel cell to perform the electric power generation for a second period, and then stopping the electric power generation by the fuel cell; and then performs control to perform the activity recovery operation.

According to this configuration, the electric power generation is performed at a low temperature (the first temperature or lower). This further facilitates condensation, at the electrodes, of moisture generated through the electric power generation. Accordingly, the amount of condensation water at the electrodes is further increased, which allows impurities adsorbed to the electrodes to be easily dissolved into the condensation water.

Further, the temperature of the fuel cell is controlled to be a predetermined temperature or lower before the electric power generation is stopped. Accordingly, the anode and the cathode become excessively humidified and a large amount of condensation water is produced at the anode and the cathode. In this state, the electric power generation is continued for the second period. As a result, contaminants of the anode and the cathode are absorbed into the condensation water and discharged to the outside of the system together with the fuel gas and the oxidizing gas. In this manner, the amount of contaminants can be further reduced before the electric power generation is stopped.

A fifth aspect of the present invention based on any one of the first to fourth aspects includes: a cooling unit configured to cool the fuel cell; and a temperature detector configured to detect a temperature of the fuel cell. In the fifth aspect, at a start-up operation of the fuel cell, the controller controls the cooling unit such that the temperature of the fuel cell becomes a second temperature or lower, and performs control such that the fuel cell performs the electric power generation for a third period.

According to this configuration, the electric power generation is performed at a low temperature (the second temperature or lower). This further facilitates condensation, at the electrodes, of water generated through the electric power generation. Accordingly, the amount of condensation water at the electrodes is further increased, which allows impurities adsorbed to the electrodes to be easily dissolved into the condensation water.

Further, at start-up, the electric power generation is performed when the fuel cell is in a low-temperature state. Accordingly, the anode and the cathode become excessively humidified and a large amount of condensation water is produced at the anode and the cathode. As a result, contaminants of the anode and the cathode are absorbed into the condensation water and discharged to the outside of the system together with the fuel gas and the oxidizing gas. In this manner, the amount of contaminants can be reduced.

In a sixth aspect of the present invention based on any one of the first to fifth aspects, the controller performs control to perform the activity recovery operation such that the activity recovery operation includes stopping the supply of the fuel gas by the fuel gas supply unit to the anode, causing the anode inert gas supply unit to supply the inert gas to the anode, and then causing the oxidizing gas supply unit to supply the oxidizing gas to the cathode.

According to this configuration, the anode inert gas supply unit replaces, with the inert gas, the hydrogen-containing fuel gas that remains at the anode; after hydrogen that reacts with oxygen is eliminated, the supply of the inert gas is stopped and the internal pressure of the anode is reduced; and thereafter, the oxidizing gas supply unit supplies the oxidizing gas to the cathode. In this manner, the amount of oxygen to cross-leak through the electrolyte membrane can be increased; the electrode potential of the anode can be increased within a shorter period of time; and a time over which the catalyst of the anode is exposed to a high potential can be reduced. Thus, oxidation of the catalyst of the anode can be further suppressed.

In a seventh aspect of the present invention based on any one of the first to sixth aspects, each time a first period has elapsed, the controller performs the stop operation, then performs the activity recovery operation, and thereafter performs control to resume the electric power generation by the fuel cell.

In an eighth aspect of the present invention based on the seventh aspect, the first period is controlled by the controller and is a period over which a power generation time cumulative value, which indicates a cumulated power generation time of the fuel cell, reaches a predetermined cumulative power generation time.

According to this configuration, a power generation time, the elapse of which results in that impurities relating to the power generation time cumulative value start affecting degradation of the fuel cell, may be experimentally obtained in advance. Examples of the impurities relating to the power generation time cumulative value include impurities occurring due to thermal decomposition or the like of components of the fuel cell during the operation of the fuel cell and impurities contained in the fuel gas and the oxidizing gas supplied from the outside. By experimentally obtaining such a power generation time, degradation of the fuel cell can be suppressed in the following manner: each time the first period has elapsed, the electric power generation by the fuel cell is stopped; the electrode potential of the anode and the electrode potential of the cathode are increased; and impurities are removed from the anode and the cathode through oxidation. The first period is assumed to be a period over which impurities are accumulated in such an amount as not to affect degradation of the fuel cell.

In a ninth aspect of the present invention based on any one of the first to eighth aspects, the anode inert gas supply unit includes a desulfurizer configured to desulfurize a raw material gas, and the inert gas is the raw material gas desulfurizer by the desulfurizer.

According to this configuration, during the operation of the fuel cell, the raw material gas, which is inactive with the fuel cell, is used as the inert gas. Therefore, as compared to a case where a gas canister such as a nitrogen canister is used as the source of the inert gas, the configuration of the fuel cell system is simplified and the cost of the system can be lowed. This makes it possible to increase the ease of installation of the fuel cell system.

In a tenth aspect of the present invention based on the first to ninth aspects, the anode inert gas supply unit is configured to supply the inert gas to the anode via the fuel gas supply unit.

This configuration eliminates the necessity of additionally including components for directly supplying the inert gas to the anode of the fuel cell. Accordingly, the fuel cell system is simplified and the cost of the system can be lowered. In addition, since the fuel gas supply unit is purged with the inert gas, degradation due to oxidation of a catalyst used in the fuel gas supply unit can be suppressed and the durability of the fuel cell system can be further improved.

An eleventh aspect of the present invention is a method of operating a fuel cell system including a fuel cell including an anode and a cathode. The fuel cell system causes the fuel cell to perform electric power generation by supplying a fuel gas containing at least hydrogen to the anode and supplying an oxidizing gas containing at least oxygen to the cathode. The method includes: a stopping step of stopping the electric power generation by the fuel cell; an activity recovering step of then stopping the supplying of the fuel gas to the anode, supplying the inert gas to the anode, and supplying the oxidizing gas containing at least oxygen to the cathode; and a resuming step of resuming, after a cell voltage of the fuel cell has decreased to a first voltage or lower, the supplying of the fuel gas to the anode to resume the electric power generation by the fuel cell.

Accordingly, the electrode potential of the anode is increased not after the cell voltage of the fuel cell decreases but when a predetermined period has elapsed (e.g., each time a first period has elapsed, the first period being assumed to be a period over which impurities are accumulated in such an amount as not to affect degradation of the fuel cell). Accordingly, impurities can be removed from the anode and the cathode and degradation of the fuel cell can be suppressed even in a case where the impurities contribute to degradation of the fuel cell without causing voltage drop of the fuel cell.

Moreover, the electrode potential of the anode is increased not by directly supplying air to the anode but in the following indirect manner: an anode inert gas supply unit replaces, with the inert gas, the hydrogen-containing fuel gas that remains at the anode; and an oxidizing gas supply unit supplies air to the cathode, thereby causing oxygen in the air to cross-leak through an electrolyte membrane. Therefore, it is unnecessary to additionally include components for supplying air to the anode. This makes it possible to simplify the fuel cell system and to reduce the cost of the fuel cell system.

When the fuel gas at the anode is replaced with the inert gas and oxygen is supplied from the cathode to the anode through the electrolyte membrane, the electrode potential of the anode increases, and the apparent cell voltage (i.e., the potential difference between the anode and the cathode) becomes the first voltage (e.g., approximately 0.1 V) or lower. The cell voltage is detected by a voltage detector. When the cell voltage has become the first voltage, the supply of the fuel gas and the supply of the oxidizing gas are started, and thereby the electric power generation by the fuel cell is resumed. Therefore, oxygen is not supplied to the anode more than necessary. Thus, catalyst oxidation at the anode can be suppressed to the minimum.

Each time the first period, which is assumed to be a period over which impurities are accumulated in such an amount as not to affect degradation of the fuel cell, has elapsed, the electric power generation by the fuel cell is stopped and not only the electrode potential of the anode but also the electrode potential of the cathode are increased. In this manner, for example, residual impurities trapped within the fuel cell at the fabrication of the fuel cell, the residual impurities poisoning the anode and the cathode, or impurities occurring due to thermal decomposition or the like of components of the fuel cell during the operation of the fuel cell, can be removed through oxidation. Thus, a fuel cell system with excellent power generation efficiency and excellent durability in which voltage drop due to impurities is suppressed can be obtained.

In a twelfth aspect of the present invention based on the eleventh aspect, the stopping step includes stopping the electric power generation by the fuel cell, stopping the supplying of the oxidizing gas to the cathode, and stopping the supplying of the fuel gas to the anode. In the twelfth aspect, after the stopping step, when the cell voltage of the fuel cell has decreased to a second voltage or lower, the activity recovering step is performed.

Accordingly, after the stop of the electric power generation by the fuel cell and before the electrode potential of the anode and the electrode potential of the cathode are increased, the supply of the oxidizing gas to the cathode and the supply of the fuel gas to the anode are temporarily stopped, and in such a state, oxygen that remains at the cathode is reacted with hydrogen that cross-leaks from the anode, and thereby the remaining oxygen is consumed. In this manner, a catalyst at the electrode interface of the cathode is subjected to reduction, and thereby catalytic activity can be recovered.

At the time, oxygen at the catalyst interface of the cathode is eliminated, which causes the electrode potential of the cathode to decrease. As a result, the apparent cell voltage (the potential difference between the anode and the cathode) detected by the voltage detector decreases. When the cell voltage detected by the voltage detector has decreased to the second voltage or lower, at which voltage the catalytic activity of the cathode is sufficiently recovered, the inert gas is supplied by the anode inert gas supply unit to the anode in a fixed amount and the oxidizing gas is supplied by the oxidizing gas supply unit again to the cathode in a fixed amount. In this manner, the electrode potential of the anode and the electrode potential of the cathode are increased; the catalytic activity of the anode and the catalytic activity of the cathode are kept high; and impurities are removed through oxidation. As a result, a high cell voltage can be maintained for a long term, and thus a fuel cell system with excellent power generation efficiency and excellent durability can be obtained.

In a thirteenth aspect of the present invention based on the eleventh or twelfth aspect, the stopping step includes stopping the electric power generation by the fuel cell and cooling the fuel cell, and the activity recovering step is performed after a temperature of the fuel cell has decreased to a first temperature or lower.

According to this configuration, the fuel cell is cooled down to a low temperature (the first temperature or lower). This facilitates condensation of moisture contained in the electrodes. If the moisture contained in the electrodes is condensed, then impurities adsorbed to the electrodes are dissolved into the condensation water. Accordingly, the impurities can be easily removed.

Steam contained in the fuel gas and oxidizing gas supplied during the electric power generation, and steam generated due to reactions, are cooled and condensed while the electric power generation by the fuel cell is stopped, and thereby condensation water is produced at the anode and the cathode. Among impurities such as residual impurities trapped within the fuel cell at the fabrication of the fuel cell or impurities occurring due to thermal decomposition or the like of components of the fuel cell during the operation of the fuel cell, water-soluble impurities are dissolved into the condensation water. The condensation water, which thus absorbs the impurities and is produced during the stopped period, can be discharged to the outside of the system together with the inert gas, or the oxidizing gas, which is supplied in the following step.

It should be noted that, in this case, the timing of stopping the electric power generation and the timing of performing the cooling need not be the same. For example, the electric power generation may be stopped first, and then the cooling may be performed after a second period has elapsed. Alternatively, the cooling may be performed first, and then the electric power generation may be stopped after the second period has elapsed.

In a fourteenth aspect of the present invention based on the thirteenth aspect, the stopping step includes: cooling the fuel cell such that the temperature of the fuel cell becomes the first temperature or lower; and causing the fuel cell to perform the electric power generation for the second period, and then stopping the electric power generation by the fuel cell, and the activity recovering step is performed after the stopping step.

Accordingly, the electric power generation is performed at a low temperature (the first temperature or lower). This further facilitates condensation, at the electrodes, of moisture generated through the electric power generation. Accordingly, the amount of condensation water at the electrodes is further increased, which allows impurities adsorbed to the electrodes to be easily dissolved into the condensation water.

Further, the temperature of the fuel cell is controlled to be a predetermined temperature or lower before the electric power generation is stopped. Accordingly, the anode and the cathode become excessively humidified and a large amount of condensation water is produced at the anode and the cathode. In this state, the electric power generation is continued for the second period. As a result, contaminants of the anode and the cathode are absorbed into the condensation water and discharged to the outside of the system together with the fuel gas and the oxidizing gas. In this manner, the amount of contaminants can be further reduced before the electric power generation is stopped.

A fifteenth aspect of the present invention based on any one of the eleventh to fourteenth aspects includes, at a start-up operation of the fuel cell, cooling the fuel cell such that a temperature of the fuel cell becomes a second temperature or lower and causing the fuel cell to perform the electric power generation for a third period.

Accordingly, the electric power generation is performed at a low temperature (the second temperature or lower). This further facilitates condensation, at the electrodes, of water generated through the electric power generation. Accordingly, the amount of condensation water at the electrodes is further increased, which allows impurities adsorbed to the electrodes to be easily dissolved into the condensation water.

Further, at start-up, the electric power generation is performed when the fuel cell is in a low-temperature state. Accordingly, the anode and the cathode become excessively humidified and a large amount of condensation water is produced at the anode and the cathode. As a result, contaminants of the anode and the cathode are absorbed into the condensation water and discharged to the outside of the system together with the fuel gas and the oxidizing gas. In this manner, the amount of contaminants can be reduced.

In a sixteenth aspect of the present invention based on any one of the eleventh to fifteenth aspects, the activity recovering step includes stopping the supplying of the fuel gas by the fuel gas supply unit to the anode, causing the anode inert gas supply unit to supply the inert gas to the anode, and then causing the oxidizing gas supply unit to supply the oxidizing gas to the cathode.

Accordingly, the anode inert gas supply unit replaces, with the inert gas, the hydrogen-containing fuel gas that remains at the anode; after hydrogen that reacts with oxygen is eliminated, the supply of the inert gas is stopped and the internal pressure of the anode is reduced; and thereafter, the oxidizing gas supply unit supplies the oxidizing gas to the cathode. In this manner, the amount of oxygen to cross-leak through the electrolyte membrane can be increased; the electrode potential of the anode can be increased within a shorter period of time; and a time over which the catalyst of the anode is exposed to a high potential can be reduced. Thus, oxidation of the catalyst of the anode can be further suppressed.

In a seventeenth aspect of the present invention based on any one of the eleventh to sixteenth aspects, each time a first period has elapsed, the stopping step is performed, then the activity recovering step is performed, and thereafter the resuming step is performed.

In an eighteen aspect of the present invention based on the seventeenth aspect, the first period is a period over which a power generation time cumulative value, which indicates a cumulated power generation time of the fuel cell, reaches a predetermined cumulative power generation time.

Accordingly, a power generation time, the elapse of which results in that impurities relating to the power generation time cumulative value start affecting degradation of the fuel cell, may be experimentally obtained in advance. Examples of the impurities relating to the power generation time cumulative value include impurities occurring due to thermal decomposition or the like of components of the fuel cell during the operation of the fuel cell and impurities contained in the fuel gas and the oxidizing gas supplied from the outside. By experimentally obtaining such a power generation time, degradation of the fuel cell can be suppressed in the following manner: each time the first period has elapsed, the electric power generation by the fuel cell is stopped; the electrode potential of the anode and the electrode potential of the cathode are increased; and impurities are removed from the anode and the cathode through oxidation. The first period is assumed to be a period over which impurities are accumulated in such an amount as not to affect degradation of the fuel cell.

Hereinafter, embodiments of the present invention are described with reference to the drawings. In each embodiment, the same components as those described in a preceding embodiment are denoted by the same reference signs as those used in the preceding embodiment, and a detailed description of such components is omitted. It should be noted that the present invention is not limited by these embodiments.

### (Embodiment 1)

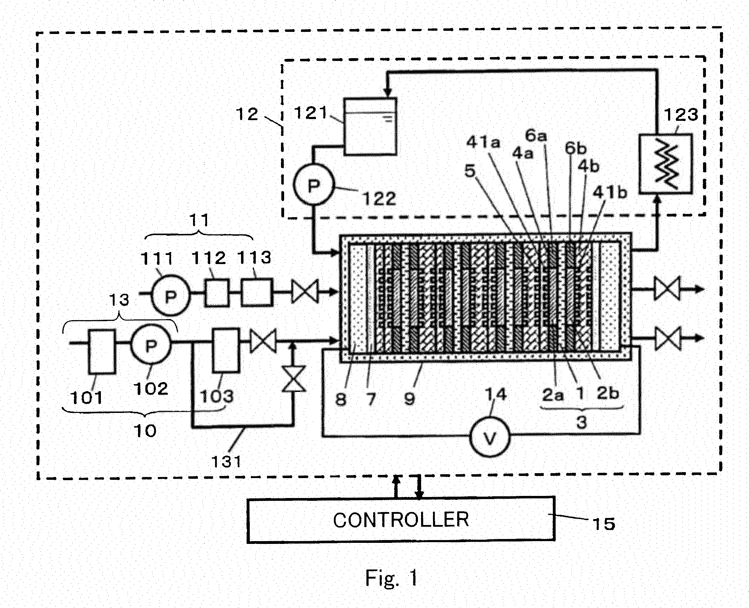

Fig. 1 shows a schematic configuration of a fuel cell system according to Embodiment 1 of the present invention.

As shown in Fig. 1, the fuel cell system according to Embodiment 1 of the present invention includes fuel cells 3, each of which is formed by arranging an anode 2a and a cathode 2b on both sides of an electrolyte 1, respectively, such that the anode 2a and the cathode 2b are opposed to each other.

The electrolyte 1 herein is, for example, a solid polymer electrolyte formed of a perfluorocarbon sulfonic acid polymer having hydrogen ion conductivity.

Each of the anode 2a and the cathode 2b includes a catalyst layer and a gas diffusion layer. The catalyst layer is formed of a mixture of a catalyst and a polymer electrolyte, in which the catalyst is formed of highly oxidation-resistant porous carbon supporting a noble metal such as platinum, and the polymer electrolyte has hydrogen ion conductivity. The gas diffusion layer has air permeability and electron conductivity, and is stacked on the catalyst layer.

Generally speaking, a platinum-ruthenium alloy catalyst, which suppresses poisoning caused by impurities contained in a fuel gas, in particular, poisoning caused by carbon monoxide, is used as the catalyst of the anode 2a.

Water repellent treated carbon paper, carbon cloth, or carbon nonwoven fabric is used as the gas diffusion layer.

An anode-side separator 4a and a cathode-side separator 4b are arranged such that they are opposed to each other with the fuel cell 3 interposed between them. A fuel gas channel 41 a through which a fuel gas is supplied and discharged is formed at a surface, of the anode-side separator 4a, on the fuel cell 3 side. An oxidizing gas channel 41 b through which an oxidizing gas is supplied and discharged is formed at a surface, of the cathode-side separator 4b, on the fuel cell 3 side.

Further, a cooling fluid channel 5 through which a cooling fluid for use in cooling the fuel cell 3 is supplied and discharged is formed at a surface, of the cathode-side separator 4b, on the opposite side to the fuel cell 3 side. Alternatively, the cooling fluid channel 5 may be formed at a surface, of the anode-side separator 4a, on the opposite side to the fuel cell 3 side. Further alternatively, an independent cooling plate in which the cooling fluid channel 5 is formed may be provided separately.

The anode-side separator 4a and the cathode-side separator 4b herein are mainly formed of an electrically conductive material such as carbon.

The anode-side separator 4a, the cathode-side separator 4b, and the fuel cell 3 are sealed by an anode-side gasket 6a and a cathode-side gasket 6b so that each fluid will not leak to the outside or into the channel of a different fluid.

A plurality of cells, each cell including the fuel cell 3 and the separators 4a and 4b in the above-described manner, are stacked; current collectors 7 are arranged at both ends, respectively, of the stacked cells for the purpose of extracting a current; end plates 8 are also arranged at both ends, respectively, of the stacked cells with insulators interposed between the current collectors 7 and the end plates 8; and these components are fastened together and thus a stack is formed. A heat insulating material 9 is disposed around the stack for the purpose of preventing radiation of heat to the outside and improving exhaust heat recovery efficiency.

A fuel gas supply unit 10 configured to supply the anode 2a with the fuel gas which contains hydrogen, an oxidizing gas supply unit 11 configured to supply the cathode 2b with the oxidizing gas which contains the atmospheric oxygen, and a cooling unit 12 configured to cool the stack and supply the cooling fluid for use in heat exchange with heat generated by the stack, are connected to the stack.

The fuel gas supply unit 10 herein includes: a desulfurizer 101 configured to remove sulfur compounds, which are catalyst poisoning materials, from a raw material gas such as city gas (i.e., a hydrocarbon gas containing methane as a main component, which is supplied in city areas through piping); a raw material gas supply unit 102 configured to control the flow rate of the desulfurized raw material gas; and a hydrogen generation unit 103 configured to generate hydrogen by reforming the desulfurized raw material gas. The desulfurizer 101 and the raw material gas supply unit 102 are collectively referred to as an anode inert gas supply unit 13 when necessary.

The hydrogen generation unit 103 includes at least a reformer, a carbon monoxide shift converter, and a carbon monoxide remover.

The anode inert gas supply unit 13 is configured such that, at the time of stopping, the anode inert gas supply unit 13 supplies the raw material gas, which is inactive with the anode 2a, to the anode 2a as an inert gas. In this manner, the fuel gas that remains at the anode 2a can be replaced at least partially with the inert gas. A bypass passage 131, which bypasses the hydrogen generation unit 103, is connected to the anode inert gas supply unit 13 and is configured such that the use of the hydrogen generation unit 103 and the use of the bypass passage 131 can be switched by means of a valve.

Although in this configuration the inert gas is supplied to the anode 2a through the bypass passage 131, the present embodiment is not limited to this. Alternatively, the inert gas (raw material gas) may be supplied to the anode 2a through the inside of the hydrogen generation unit 103 in a case where a reforming reaction of the raw material gas does not occur for the reason that the hydrogen generation unit 103 is in a stopped state or the temperature is low (see Embodiment 7 described below, for example).

According to the above configuration, during the operation of the fuel cell, the raw material gas, which is inactive with the fuel cell, is used as the inert gas. Therefore, as compared to a case where a gas canister such as a nitrogen canister is used as the source of the inert gas, the configuration of the fuel cell system is simplified and the cost of the system can be lowered. This makes it possible to increase the ease of installation of the fuel cell system.

Next, operations performed by the fuel gas supply unit 10 are briefly described. For example, in the case of using methane as the raw material gas, reactions involving steam that are represented by [Chemical Formula 1] and [Chemical Formula 2] occur in the reformer. As a result, hydrogen is generated.

[Chemical Formula 1] *CH₄*+*H₂O→CO*+3*H₂*

[Chemical Formula 2] *CO*+*H*₂*O→CO*₂+*H*₂

It should be noted that all of the reactions occurring in the reformer are collectively represented by [Chemical Formula 3] below.

[Chemical Formula 3] *CH*₄+*2H*₂*O→CO*₂+4*H*₂

However, a reformed gas generated in the reformer contains approximately 10% of carbon monoxide other than hydrogen. The carbon monoxide in the reformed gas causes poisoning of the catalyst included in the anode 2a when the temperature is in the operating temperature range of the fuel cell 3, thereby decreasing the catalytic activity of the catalyst. Therefore, carbon monoxide generated in the reformer is converted into carbon dioxide in the carbon monoxide shift converter as represented in the reaction formula in [Chemical Formula 2]. As a result, the carbon monoxide concentration decreases to approximately 5000 ppm.

Moreover, the carbon monoxide, the concentration of which has been reduced, is selectively oxidized in the carbon monoxide remover through a reaction represented by [Chemical Formula 4] below by means of oxygen taken from, for example, the atmosphere. As a result, the concentration of the carbon monoxide decreases to approximately 10 ppm or lower, and thereby a decrease in the catalytic activity of the catalyst of the anode 2a can be suppressed.

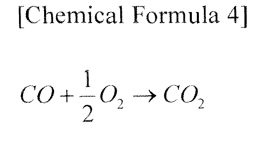

Furthermore, an air bleeder configured to supply air to the anode 2a during electric power generation may be provided, in which case an influence of the carbon monoxide that still remains in a small amount can be further reduced by mixing approximately 1 to 2 % of air with the hydrogen gas generated by the fuel processor 103.

It should be noted that the method by which the fuel gas supply unit 10 generates hydrogen is not limited to the above-described steam reforming method, but may be a different hydrogen generation method such as an autothermal method. Furthermore, in a case where the concentration of carbon monoxide contained in the fuel gas is low, the air bleeder may be eliminated.

The oxidizing gas supply unit 11 includes: an oxidizing gas flow rate controller 111 configured to control the flow rate of the oxidizing gas; an impurity remover 112 configured to remove impurities in the oxidizing gas to some extent; and a humidifier 113 configured to humidify the oxidizing gas.

The oxidizing gas herein is a generic term for gases containing at least oxygen (as well as gases from which oxygen can be supplied). For example, the atmosphere (atmospheric air) can be used as the oxidizing gas.

The impurity remover 112 includes: a dust removal filter configured to remove dusts from the atmosphere; an acid gas removal filter configured to remove sulfur-based impurities such as sulfur dioxide and hydrogen sulfide, and to remove acid gases in the atmosphere such as nitrogen oxides; and an alkaline gas removal filter configured to remove alkaline gases in the atmosphere such as ammonia. Each of these filters may be eliminated depending on the installation environment and the contamination resistance of the fuel cell 3.

The cooling unit 12 includes: a cooling fluid tank 121 configured to store the cooling fluid for use in cooling the stack; a cooling fluid pump 122 configured to supply the cooling fluid; and a heat exchanger 123 configured to produce hot water by performing heat exchange with the cooling fluid that has flowed through the cooling fluid channel 5 and that has previously been subjected to heat exchange with heat generated by the fuel cell 3.

A voltage detector 14 for use in detecting the cell voltage of the stack is connected to the stack.

A controller 15 is configured to control a start-up operation, power generation operation, and stop operation of the fuel cell 3, and to control the operations of the fuel gas supply unit 10, the oxidizing gas supply unit 11, the anode inert gas supply unit 13, and the cooling unit 12, for example.

Next, operations that the fuel cell system configured as above performs at the time of generating electric power are described with reference to Fig. 1.

First, in Fig. 1, the fuel gas is supplied to the anode 2a and the oxidizing gas is supplied to the cathode 2b. Then, the controller 15 is controlled to connect a load to the fuel cell 3. Accordingly, hydrogen in the fuel gas releases electrons at the interface between the catalyst layer of the anode 2a and the electrolyte 1 as shown in a reaction formula in [Chemical Formula 5] below, and thereby becomes hydrogen ions.

[Chemical Formula 5] *H*₂→2*H*⁺+ 2*e⁻*

The hydrogen ions are then released and move to the cathode 2b through the electrolyte 1, and receive electrons at the interface between the catalyst layer of the cathode 2b and the electrolyte 1. At the time, the hydrogen ions react with oxygen in the oxidizing gas supplied to the cathode 2b, and thereby water is generated as shown in a reaction formula in [Chemical Formula 6] below.

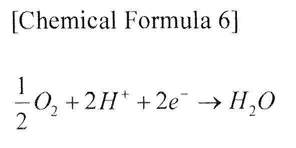

The above reactions are collectively represented by [Chemical Formula 7] below.

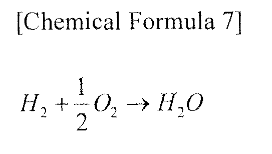

Then, a flow of electrons flowing through the load can be used as direct-current electrical energy. Since a series of the above reactions are exothermic reactions, heat that is generated by the fuel cell 3 may be recovered through heat exchange by means of the cooling fluid supplied from the cooling fluid channel 5, and the recovered heat may be utilized as thermal energy in the form of, for example, hot water.

Usually, the atmosphere at the installation location of the fuel cell 3 is used as the oxidizing gas for use in the electric power generation by the fuel cell 3. However, it is often the case that various impurities are contained in the atmosphere. Examples of such impurities include: sulfur compounds such as sulfur dioxide contained in a volcanic smoke or flue gas; nitrogen oxides contained by a large amount in factory flue gas or automobile flue gas; and ammonia which is an odor component.

Moreover, there is a possibility that impurities are mixed into the anode 2a and the cathode 2b of the fuel cell 3. Examples of such impurities include: residual impurities trapped within the fuel cell 3 at the fabrication of the fuel cell 3; impurities occurring due to thermal decomposition or the like of fuel cell components (e.g., electrolyte) during the operation of the fuel cell 3; and impurities occurring from pipes or other components used in the fuel cell system.

These impurities cause negative influence on the fuel cell 3. The impurities may adsorb to the catalyst of the anode 2a or cathode 2b and hinder chemical reactions necessary for electric power generation, thereby causing a decrease in the output of the fuel cell 3. However, in a case where the impurities are accumulated at the anode 2a, the impurity accumulation does not easily cause voltage drop of the fuel cell 3 since the polarization of the anode 2a is not very high by its nature.

If impurities exist at the anode 2a of the fuel cell 3, the impurities react with oxygen that cross-leaks from the cathode 2b and thereby hydrogen peroxide is produced at the anode 2a side, and the impurities react with the hydrogen peroxide, causing a chemical reaction. As a result, a radical species with extremely strong oxidizing power is formed at the anode 2a side. If the electrolyte 1 and the catalyst layer of the anode 2a or cathode 2b, each of which contains a resin, stay in contact with the radical species for a long period of time, then the resin gradually decomposes, which causes degradation of the fuel cell 3. However, particularly in an early stage of the degradation, the degradation is not reflected in the cell voltage. Therefore, there is a case where the fuel cell 3 becomes unrecoverably degraded by the time the cell voltage starts decreasing.

Impurities adsorbed to the anode 2a and impurities adsorbed to the cathode 2b are oxidized if the electrode potential of the anode 2a and the electrode potential of the cathode 2b are increased to respective oxidation-reduction potentials that cause oxidation of the impurities adsorbed to the anode 2a and the impurities adsorbed to the cathode 2b. Due to such oxidation, the adsorption of the impurities to the anode 2a or cathode 2b becomes weak, or the impurities are gasified or ionized. As a result, the impurities become likely to be desorbed from the anode 2a or cathode 2b.

An electrode potential that causes oxidation of an impurity depends on the type of the impurity, the type of the electrode, the temperature, pH, etc. The inventors of the present invention particularly paid attention to impurities that cause poisoning of the anode 2a, the electrode potential of which is maintained at a low potential during normal power generation. As a result of diligent studies, the inventors have found that by increasing the electrode potential of the anode 2a, an impurity adsorbed to the anode 2a can be removed through oxidation. For example, the inventors have found that by increasing the electrode potential of the anode 2a to 0.5 to 1.2 V, an impurity made of, for example, an organic matter having an oxidation peak of approximately 1.0 V can be removed through oxidation.

The inventors have also found that degradation of the fuel cell 3 can be suppressed in the following manner: experimentally obtain in advance a first period, i.e., a period over which impurities are accumulated in such an amount as not to affect degradation of the fuel cell 3; stop the electric power generation by the fuel cell 3 each time the first period has elapsed; and increase the electrode potential of the anode 2a and the electrode potential of the cathode 2b during the stop period to remove, through oxidation, impurities that are poisoning the anode 2a and the cathode 2b.

First, in order for the controller 15 to determine a setting value of the first period for impurity removal, an electric power generation test was conducted, by using a fuel cell 3 including the same components and having the same configuration as the fuel cell 3 used in the above-described fuel cell system. Then, in order to quantify degradation of the fuel cell 3 that occurs while the fuel cell 3 is in operation, the concentration of fluorine ions contained in drain water discharged from the anode 2a and the cathode 2b during the electric power generation was analyzed.

Fluorine ions were detected in merely an extremely small amount for a while after the start of the electric power generation. It was found that an elution amount of fluorine ions started increasing little by little after approximately 5000 hours had elapsed since the start of the operation. The reason for this is considered as follows: during the operation, residual impurities trapped within the fuel cell 3 at the fabrication of the fuel cell 3, impurities occurring due to thermal decomposition or the like of components of the fuel cell 3, or impurities occurring from pipes or other components used in the fuel cell system, were accumulated little by little: the impurities reacted with oxygen that had cross-leaked from the cathode 2b and thereby hydrogen peroxide was generated at the anode 2a side; the impurities reacted with the hydrogen peroxide, causing a chemical reaction; as a result, a radical species with extremely strong oxidizing power was formed at the anode 2a side; and then the electrolyte 1 and the catalyst layer of the anode 2a or cathode 2b, each of which contains a resin, stayed in contact with the radical species for a long period of time, which caused gradual decomposition of the resin.

It should be noted that even after approximately 5000 hours had elapsed, the cell voltage of the fuel cell 3 was substantially the same as its initial cell voltage. Thus, it has been found that even if the fuel cell 3 degrades, it is difficult to detect the degradation at an early stage based on the cell voltage.

The time, the elapse of which results in the degradation of the fuel cell 3 due to impurities, greatly depends on factors such as: the materials, compositions, usage amounts of the electrolyte 1, the anode 2a, and the cathode 2b; and operating conditions including humidity and the operating temperature of the fuel cell 3. Therefore, it is preferred that the time is calculated for each of the following factors: the fuel cell 3 to be actually used; the operating conditions; and the configuration of the fuel cell system.

The catalyst of the anode 2a is subjected to oxidative degradation when the electrode potential of the anode 2a is increased. Therefore, a period over which the electrode potential of the anode 2a is increased is preferably as short as possible, and the number of times of increasing the electrode potential of the anode 2a is preferably as small as possible.

In view of the above, in the fuel cell system according to Embodiment 1 of the present invention, the first period for removing impurities accumulated in the fuel cell 3 is set as a period over which a power generation time cumulative value, which indicates a cumulated power generation time of the fuel cell 3, reaches approximately 1000 to 5000 hours. For the first period, a sequence of operations for suppressing degradation of the fuel cell 3 due to impurities is performed once. It should be noted that the first period may be alternatively set as a regular period that does not depend on the power generation time.

When the sequence of operations for suppressing degradation of the fuel cell 3 due to impurities is performed once for the first period, it is necessary to temporarily stop the electric power generation. This need not be a forcible stop. If there is a timing of stopping the fuel cell system close to when the power generation time cumulative value of the fuel cell 3 reaches a predetermined period, then the sequence of operations for suppressing degradation of the fuel cell 3 due to impurities may be performed at the timing.

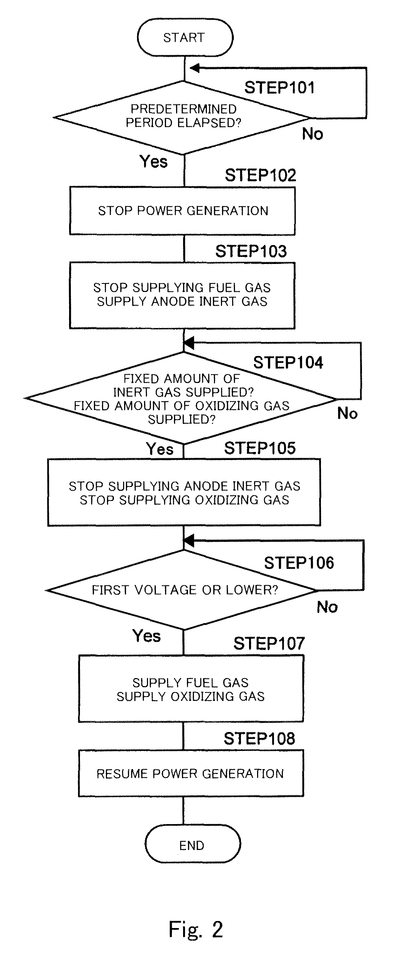

Described below with reference to a flowchart shown in Fig. 2 is a sequence of operations through which the fuel cell system suppresses degradation of the fuel cell due to impurities.

As shown in Fig. 2, when the power generation time of the fuel cell 3 is cumulated until a predetermined period has elapsed (e.g., when the cumulated power generation time has reached the first period) (step 101), the controller 15 stops electric power generation by the fuel cell 3 (step 102); stops the supply of the fuel gas by the fuel gas supply unit 10 to the anode 2a; and causes the anode inert gas supply unit 13 to supply the inert gas (i.e., desulfurized raw material gas) to the anode 2a (step 103). At the time, the inert gas is supplied to the anode 2a in a fixed amount necessary for replacing, with the inert gas, the fuel gas that remains at the anode 2a, and the oxidizing gas is supplied to the cathode 2b in a fixed amount necessary for causing cross-leak of oxygen to the anode 2a and increasing the electrode potential of the anode 2a (step 104). It is preferred that the supply flow rate of the oxidizing gas is increased or decreased, as necessary, from the supply flow rate during the electric power generation.

Here, the supply amount of the inert gas is an amount necessary for replacing, with the inert gas, the fuel gas that remains at the anode 2a, and the supply amount of the oxidizing gas is an amount necessary for increasing the electrode potential of the anode 2a to such an electrode potential as to cause impurities to be oxidized by oxygen that has cross-leaked. It is preferred that these supply amounts are experimentally obtained in advance.

Although it has been described that the inert gas is supplied to the anode 2a in a fixed amount and the oxidizing gas is supplied to the cathode 2b in a fixed amount, the manner of supplying the gases is not limited to this. As one example, the amount of inert gas supplied to the anode 2a and the amount of oxidizing gas supplied to the cathode 2b may be different from each other. As another example, the inert gas may be supplied to the anode 2a for a fixed period, and the oxidizing gas may be supplied to the cathode 2b for a fixed period.

When the inert gas in the fixed amount and the oxidizing gas in the fixed amount are supplied, the supply of the inert gas by the anode inert gas supply unit 13 and the supply of the oxidizing gas by the oxidizing gas supply unit 11 are stopped (step 105).

At the time, the electrode potential of the cathode 2b is approximately 1 V and the electrode potential of the anode 2a gradually increases, due to oxygen that cross-leaks from the cathode 2b, from approximately 0 V, which is the electrode potential prior to the inert gas is introduced to the anode 2a, toward the electrode potential of the cathode 2b. When a cell voltage detected by the voltage detector 14 (i.e., the potential difference between the electrode potential of the anode 2a and the electrode potential of the cathode 2b) has become a first voltage (approximately 0.1 V) or lower, the electrode potential of the anode 2a is approximately 0.9 V or higher and it is determined that impurities adsorbed to the anode 2a, including an impurity made of an organic matter having an oxidation peak of approximately 1.0 V, have been partially or entirely oxidized (step 106). Then, the fuel gas supply unit 10 and the oxidizing gas supply unit 11 are operated again to supply the fuel gas to the anode 2a and the oxidizing gas to the cathode 2b (step 107), and thereby the electric power generation by the fuel cell 3 is resumed (step 108).

It should be noted that step 106 may be performed following step 103 by skipping steps 104 and 105. In this case, in step 107, the supply of the inert gas to the anode 2a may be stopped; the supply of the fuel gas to the anode 2a may be started; and the supply of the oxidizing gas to the cathode 2b may be continued.

It should be noted that the first voltage relates to an electrode potential necessary for oxidizing impurities adsorbed to the anode 2a. Therefore, it is preferred that the first voltage is experimentally determined beforehand in accordance with impurities to be removed.

According to the fuel cell system of Embodiment 1 of the present invention with the above-described configuration, the electrode potential of the anode 2a is increased not after the cell voltage of the fuel cell 3 decreases but each time the first period has elapsed, the first period being assumed to be a period over which impurities are accumulated in such an amount as not to affect degradation of the fuel cell 3. Accordingly, impurities can be removed from the anode 2a and the cathode 2b and degradation of the fuel cell 3 can be suppressed even in a case where the impurities contribute to degradation of the fuel cell 3 without causing voltage drop of the fuel cell 3.

Moreover, the electrode potential of the anode 2a is increased not by directly supplying air to the anode 2a but in the following indirect manner: the anode inert gas supply unit 13 replaces, with the inert gas, the hydrogen-containing fuel gas that remains at the anode 2a; and the oxidizing gas supply unit 11 supplies air to the cathode 2b, thereby causing oxygen in the air to cross-leak through the membrane of the electrolyte 1. Therefore, it is unnecessary to additionally include components for supplying air to the anode 2a. This makes it possible to simplify the fuel cell system and to reduce the cost of the fuel cell system.

When the fuel gas at the anode 2a is replaced with the inert gas and oxygen that has cross-leaked from the cathode 2b is supplied to the anode 2a, the electrode potential of the anode 2a increases, and the apparent cell voltage (i.e., the potential difference between the anode 2a and the cathode 2b) becomes approximately 0,1 V or lower. The cell voltage is detected by the voltage detector 14. When the cell voltage has become approximately 0.1 V or lower, the supply of the fuel gas and the supply of the oxidizing gas are started, and thereby the electric power generation by the fuel cell 3 is resumed. Therefore, oxygen is not supplied to the anode 2a more than necessary. Thus, catalyst oxidation at the anode 2a can be suppressed to the minimum.

Each time the first period, which is assumed to be a period over which impurities are accumulated in such an amount as not to affect degradation of the fuel cell 3, has elapsed, the electric power generation by the fuel cell 3 is stopped and not only the electrode potential of the anode 2a but also the electrode potential of the cathode 2b are increased. In this manner, for example, residual impurities trapped within the fuel cell 3 at the fabrication of the fuel cell 3, the residual impurities poisoning the anode 2a and the cathode 2b, or impurities occurring due to thermal decomposition or the like of components of the fuel cell 3 during the operation of the fuel cell 3, can be removed through oxidation. Thus, a fuel cell system with excellent power generation efficiency and excellent durability in which voltage drop due to impurities is suppressed can be obtained.

### (Embodiment 2)

A fuel cell system according to Embodiment 2 of the present invention is different from the fuel cell system according to Embodiment 1, in that each time the first period has elapsed, the controller 15 performs the following operations: stop the electric power generation by the fuel cell 3; stop the supply of the oxidizing gas by the oxidizing gas supply unit 11 to the cathode 2b; stop the supply of the fuel gas by the fuel gas supply unit 10 to the anode 2a; and after the cell voltage of the fuel cell 3 which is detected by the voltage detector 14 decreases to a second voltage or lower, cause the anode inert gas supply unit 13 to supply the inert gas in a fixed amount to the anode 2a and cause the oxidizing gas supply unit 11 to supply the oxidizing gas in a fixed amount to the cathode 2b.

It should be noted that Embodiment 2 is the same as Embodiment 1 other than a sequence of operations performed after the stop of the electric power generation, specifically, a sequence from a step of stopping the supply of the fuel gas and the oxidizing gas to a step of waiting for the cell voltage to decrease to the second voltage or lower. Therefore, in Embodiment 2, the same description as in Embodiment 1 is omitted.

Fig. 3 shows a flowchart for the fuel cell system according to Embodiment 2 of the present invention.

First, when the power generation time of the fuel cell 3 is cumulated until a predetermined period has elapsed (e.g., when the cumulated power generation time has reached the first period) (step 201), the controller 15 stops the electric power generation by the fuel cell 3 (step 202); stops the supply of the oxidizing gas by the oxidizing gas supply unit 11 to the cathode 2b and the supply of the fuel gas by the fuel gas supply unit 10 to the anode 2a (step 203); and waits for the cell voltage detected by the voltage detector 14 to decrease to the second voltage (approximately 0.2 V) or lower (step 204).

When the cell voltage has decreased to the second voltage or lower, the controller 15 causes the anode inert gas supply unit 13 to supply the inert gas (i.e., desulfurized raw material gas) to the anode 2a and causes the oxidizing gas supply unit 11 to supply the oxidizing gas to the cathode 2b (step 205), so that the inert gas is supplied to the abode 2a in a fixed amount necessary for replacing, with the inert gas, the fuel gas that remains at the anode 2a, and so that the oxidizing gas is supplied to the cathode 2b in a fixed amount necessary for causing cross-leak of oxygen to the anode 2a and increasing the electrode potential of the anode 2a (step 206).

Since the sequence of operations from step 207 and thereafter is the same as in Embodiment 1, the description thereof is omitted.

According to the fuel cell system of Embodiment 2 of the present invention with the above-described configuration, after the stop of the electric power generation by the fuel cell 3 and before the electrode potential of the anode 2a and the electrode potential of the cathode 2b are increased, the supply of the oxidizing gas to the cathode 2b and the supply of the fuel gas to the anode 2a are temporarily stopped, and in such a state, oxygen that remains at the cathode 2b is reacted with hydrogen that cross-leaks from the anode 2a, and thereby the remaining oxygen is consumed. In this manner, the catalyst at the electrode interface of the cathode 2b is subjected to reduction, and thereby catalytic activity can be recovered.

At the time, oxygen at the catalyst interface of the cathode 2b is eliminated, which causes the electrode potential of the cathode 2b to decrease. As a result, the apparent cell voltage (the potential difference between the anode 2a and the cathode 2b) detected by the voltage detector 14 decreases. When the cell voltage detected by the voltage detector 14 has decreased to the second voltage (e.g., 0.2 V) or lower, at which voltage the catalytic activity of the cathode 2b is sufficiently recovered, the inert gas is supplied by the anode inert gas supply unit 13 to the anode 2a in a fixed amount and the oxidizing gas is supplied by the oxidizing gas supply unit 11 again to the cathode 2b in a fixed amount. In this manner, the electrode potential of the anode 2a and the electrode potential of the cathode 2b are increased; the catalytic activity of the anode 2a and the catalytic activity of the cathode 2b are kept high; and impurities are removed through oxidation. As a result, a high cell voltage can be maintained for a long term, and thus a fuel cell system with excellent power generation efficiency and excellent durability can be obtained. The second voltage is merely required to be lower than a power generation voltage during normal operation. Preferably, the second voltage is 0 V to 0.5 V, for example.

### (Embodiment 3)

A fuel cell system according to Embodiment 3 of the present invention is different from the fuel cell system according to Embodiment 2, in that each time the first period has elapsed, the controller 15 performs the following operations: stop the electric power generation by the fuel cell 3; stop cooling of the fuel cell 3 by the cooling unit 12; and after the cell voltage of the fuel cell 3 which is detected by the voltage detector 14 has decreased to the second voltage or lower and after the temperature of the fuel cell 3 has decreased to a first temperature or lower, cause the anode inert gas supply unit 13 to supply the inert gas in a fixed amount to the anode 2a and cause the oxidizing gas supply unit 11 to supply the oxidizing gas in a fixed amount to the cathode 2b.

It should be noted that Embodiment 3 is the same as Embodiment 2 other than a sequence of operations performed until the temperature of the fuel cell 3 decreases to the first temperature or lower. Therefore, in Embodiment 3, the same description as in Embodiment 2 is omitted.

Fig. 4 shows a flowchart for the fuel cell system according to Embodiment 3 of the present invention.

First, when the power generation time of the fuel cell 3 is cumulated until a predetermined period has elapsed (e.g., when the cumulated power generation time has reached the first period) (step 301), the controller 15 stops the electric power generation by the fuel cell 3 and causes the temperature of the fuel cell 3 to decrease by means of the cooling fluid sent to the fuel cell 3 (step 302). Then, the controller 15 stops the supply of the oxidizing gas by the oxidizing gas supply unit 11 to the cathode 2b and the supply of the fuel gas by the fuel gas supply unit 10 to the anode 2a (step 303), and waits for the cell voltage detected by the voltage detector 14 to decrease to the second voltage (approximately 0.2 V) or lower and waits for the temperature of the fuel cell 3 to decrease to the first temperature (approximately 50 °C) or lower (step 304).

The first temperature herein is lower than the dew point of the fuel gas supplied to the anode 2a and the dew point of the oxidizing gas supplied to the cathode 2b, and is a temperature at which condensation water is produced in an amount that is sufficient for washing away impurities adsorbed to the anode 2a and the cathode 2b. The first temperature is preferably lower than the dew point temperature of the anode 2a and the dew point temperature of the cathode 2b by at least 5 °C. It is preferred that the first temperature is experimentally obtained in advance.

Since the sequence of operations from step 305 and thereafter is the same as in Embodiment 2, the description thereof is omitted.

An analysis was conducted by using the fuel cell system with the above-described configuration, in which degradation of the fuel cell 3 was presumed to be occurring due to actual impurity accumulation. In the analysis, the above-described sequence of operations was applied to the fuel cell system, and voltage variation of the fuel cell 3, and a fluorine ion concentration in drain water which indicates the degree of degradation of the fuel cell 3, were analyzed. Also, as a comparative example, the voltage variation and a behavior of the fluorine ion concentration in a case where the above-described sequence of operations was not applied to the fuel cell system were evaluated in the same manner.

Here, the utilization of the fuel gas supplied to the anode 2a was set to 70 %; the dew point of the fuel gas was set to approximately 55 °C; the utilization of the oxidizing gas supplied to the cathode 2b was set to 50 %; and the dew point of the oxidizing gas was set to approximately 65 °C. Then, in order to obtain a constant flow of current, a load was controlled such that a current density with respect to the electrode area of the anode 2a and the cathode 2b became 0.2 A/cm2. Moreover, the flow rate of the cooling fluid for use in cooling the fuel cell 3 was controlled, such that a temperature near a fuel cell cooling fluid channel inlet manifold became approximately 60 °C and a temperature near a fuel cell cooling fluid channel outlet manifold became approximately 70 °C.

Then, while an electric power generation test was conducted, a fluorine ion concentration in drain water discharged from the anode 2a and the cathode 2b was measured.

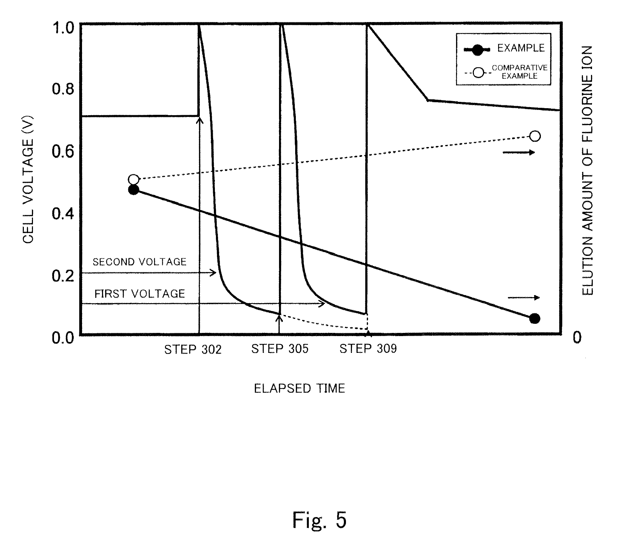

Fig. 5 shows results of measurement of a voltage behavior and a fluorine ion concentration indicating the degree of degradation of the fuel cell 3, the measurement being performed from when the fuel cell system was stopped to when the fuel cell system was started, during which period the sequence of impurity removal operations was performed. As shown in Fig. 5, in step 302, the electric power generation by the fuel cell 3 was stopped, and at the time, the cell voltage temporarily increased to an open-circuit voltage (approximately 1 V). Thereafter, the cell voltage quickly decreased and fell below the second voltage (approximately 0.2 V). At the time, oxygen remaining at the cathode 2b reacted with hydrogen cross-leaking from the anode 2a, and was thereby consumed. As a result, the catalyst of the cathode 2b was sufficiently reduced and its catalytic activity was increased.

In step 305, the fuel gas that remains at the anode 2a is replaced with the inert gas supplied by the anode inert gas supply unit 13, and also, the oxidizing gas is supplied to the cathode 2b again. Here, immediately after the oxidizing gas is supplied, a voltage close to the open-circuit voltage temporarily occurs due to hydrogen remaining at the anode 2a. However, the cell voltage decreases again since the hydrogen at the anode 2a is removed quickly. At the time, the anode 2a is oxidized by oxygen cross-leaking from the cathode 2b, and the electrode potential of the anode 2a gradually increases to become close to the electrode potential of the cathode 2b which is supplied with air.

When the electrode potential of the anode 2a increased to reach near 1 V, the cell voltage became no greater than approximately 0.1 V, i.e., no greater than the first voltage.

When the fuel gas and the oxidizing gas are supplied in step 309 for generating electric power again, the cell voltage becomes the open-circuit voltage, and starts taking a load and the electric power generation is resumed.

In the comparative example, the behavior of the fluorine ion concentration did not show an increase in the fluorine ion concentration at an early stage. However, it was observed that the fluorine ion concentration gradually increased after approximately 5000 hours had elapsed. The behavior of the fluorine ion concentration was checked before and after the sequence of impurity removal operations was performed. When the sequence of impurity removal operations was performed with the fuel cell system according to Embodiment 3 of the present invention, the fluorine ion concentration in the fuel cell system according to Embodiment 3 of the present invention stopped increasing and the fluorine ion concentration decreased to substantially the same level as in an early stage as shown in Fig. 5. On the other hand, in the comparative example in which normal start-up and stop were performed without performing the sequence of impurity removal operations, it was observed that the fluorine ion concentration kept increasing.

Thus, according to the fuel cell system of Embodiment 3 of the present invention with the above-described configuration, steam contained in both the fuel gas and the oxidizing gas supplied during the electric power generation, and steam generated due to reactions, are cooled and condensed while the electric power generation by the fuel cell 3 is stopped, and thereby condensation water is produced at the anode 2a and the cathode 2b. Among impurities such as residual impurities trapped within the fuel cell 3 at the fabrication of the fuel cell 3 or impurities occurring due to thermal decomposition or the like of components of the fuel cell 3 during the operation of the fuel cell 3, water-soluble impurities are dissolved into the condensation water. The condensation water, which thus absorbs the impurities and is produced during the stopped period, can be discharged to the outside of the system together with the inert gas, or the oxidizing gas, which is supplied in step 305.

### (Embodiment 4)

A fuel cell system according to Embodiment 4 of the present invention is different from the fuel cell system according to Embodiment 3, in that the controller 15 causes the oxidizing gas supply unit 11 to supply the oxidizing gas to the cathode 2b in a fixed amount after causing the anode inert gas supply unit 13 to supply the inert gas to the anode 2a in a fixed amount.

It should be noted that Embodiment 4 is the same as Embodiment 3 other than the order of supplying the inert gas and the oxidizing gas. Therefore, in Embodiment 4, the same description as in Embodiment 3 is omitted.

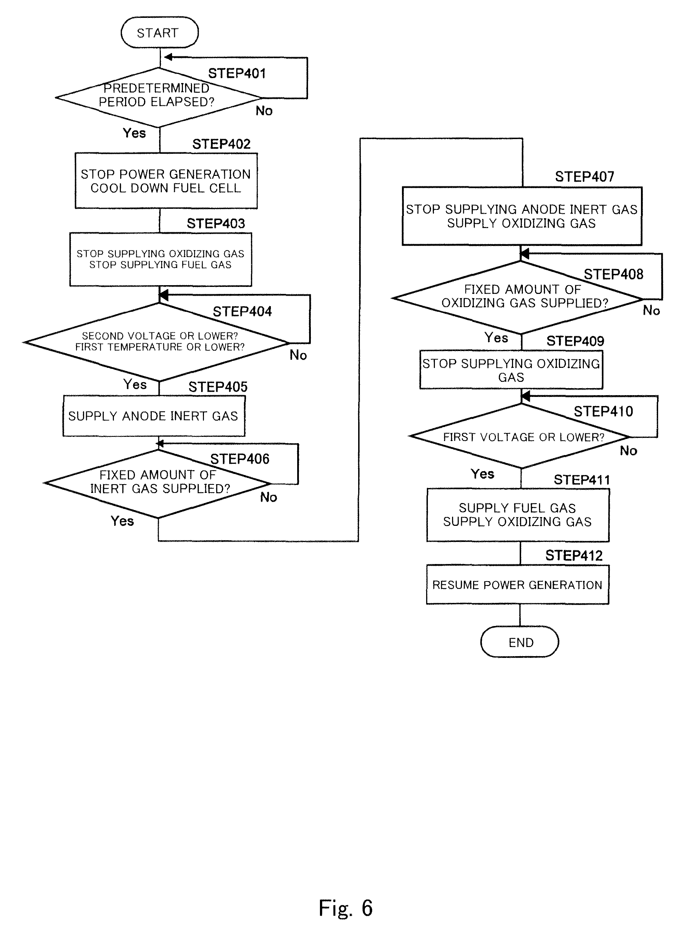

Fig. 6 shows a flowchart for the fuel cell system according to Embodiment 4 of the present invention.

In Embodiment 4, steps from stopping the electric power generation until the cell voltage of the fuel cell 3 becomes the second voltage or lower are the same as those in Embodiment 3.

When the cell voltage of the fuel cell 3 has become the second voltage, the inert gas is supplied to the anode 2a by the anode inert gas supply unit 13 (step 405), so that the inert gas is supplied in a fixed amount for replacing, with the inert gas, the fuel gas that remains at the anode 2a (step 406). Then, the supply of the inert gas by the anode inert gas supply unit is stopped, and the oxidizing gas is supplied to the cathode 2b by the oxidizing gas supply unit 11 (step 407).

When the oxidizing gas is supplied to the cathode 2b in a fixed amount (step 408), the supply of the oxidizing gas is stopped (step 409), and cross-leak of oxygen from the cathode 2b is caused and thereby the electrode potential of the anode 2a is increased.

Since step 410 and the steps thereafter are the same as in Embodiment 3, the description thereof is omitted.

According to the fuel cell system of Embodiment 4 of the present invention with the above-described configuration, the anode inert gas supply unit 13 replaces, with the inert gas, the hydrogen-containing fuel gas that remains at the anode 2a; after hydrogen that reacts with oxygen is eliminated, the supply of the inert gas is stopped and the internal pressure of the anode 2a is reduced; and thereafter, the oxidizing gas supply unit 11 supplies air to the cathode 2b. In this manner, the amount of oxygen to cross-leak through the membrane of the electrolyte 1 can be increased; the electrode potential of the anode 2a can be increased within a shorter period of time; and a time over which the catalyst of the anode 2a is exposed to a high potential can be reduced. Thus, oxidation of the catalyst of the anode 2a can be further suppressed.

### (Embodiment 5)

A fuel cell system according to Embodiment 5 of the present invention is different from the fuel cell system according to Embodiment 3, in that the controller 15 controls the cooling unit 12 such that the temperature of the fuel cell 3 becomes the first temperature or lower at a time point that is a second period earlier than the elapse of the first period, and stops the electric power generation by the fuel cell after the electric power generation is performed for the second period.

It should be noted that Embodiment 5 is the same as Embodiment 3 other than decreasing the temperature of the fuel cell 3 before stopping the electric power generation in the sequence of impurity removal operations. Therefore, in Embodiment 5, the same description as in Embodiment 3 is omitted.

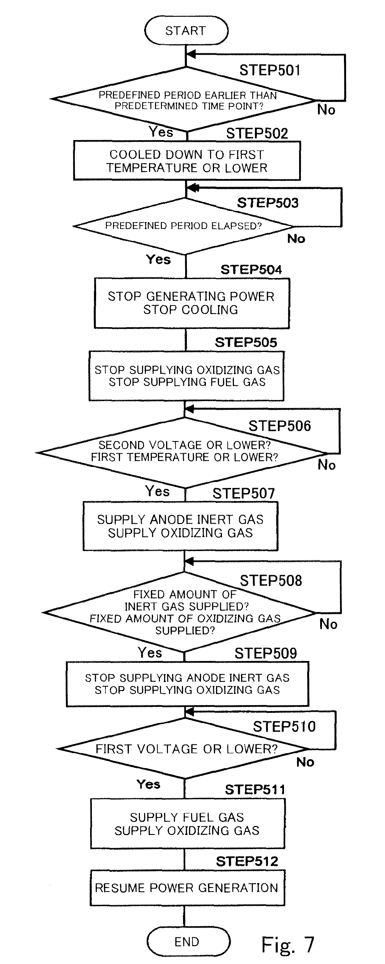

Fig. 7 shows a flowchart for the fuel cell system according to Embodiment 5 of the present invention.

First, when a time point that is a predefined period earlier than a predetermined time point (e.g., a time point that is a second period (in a range from several tens of minutes to several tens of hours) earlier than the elapse of the first period over which impurities are accumulated in such an amount as not to affect degradation of the fuel cell 3) arrives (step 501), the controller 15 performs, for example, control to increase the speed of the cooling fluid pump 122 of the cooling unit 12 in order to decrease the temperature of the fuel cell 3, and thereby the temperature of the fuel cell 3 decreases to the first temperature (approximately 50 °C) or lower (step 502).

The first temperature herein is lower than the dew point of the fuel gas supplied to the anode 2a and the dew point of the oxidizing gas supplied to the cathode 2b, and is a temperature at which condensation water is produced in an amount that is sufficient for washing away impurities adsorbed to the anode 2a and the cathode 2b. The first temperature is preferably lower than the dew point temperature of the anode 2a and the dew point temperature of the cathode 2b by at least 5 °C, and is preferably such a temperature as not to cause flooding. It is preferred that the first temperature is experimentally obtained in advance.

Then, the electric power generation by the fuel cell 3 in such a low-temperature state continues, and when the predefined period (e.g., the second period) has elapsed (step 503), the electric power generation is stopped (step 504). Since the steps performed after the electric power generation is stopped are the same as in Embodiment 3, the description thereof is omitted.

According to the fuel cell system of Embodiment 5 of the present invention with the above-described configuration, the temperature of the fuel cell 3 is controlled to be a predetermined temperature or lower before the electric power generation is stopped. Accordingly, the anode 2a and the cathode 2b become excessively humidified and a large amount of condensation water is produced at the anode 2a and the cathode 2b. In this state, the electric power generation is continued for the second period. As a result, contaminants of the anode 2a and the cathode 2b are absorbed into the condensation water and discharged to the outside of the system together with the fuel gas and the oxidizing gas. In this manner, the amount of contaminants can be further reduced before the electric power generation is stopped.

### (Embodiment 6)

A fuel cell system according to Embodiment 6 of the present invention is different from the fuel cell system according to Embodiment 3, in that the controller 15 controls the cooling unit 12 such that the temperature of the fuel cell 3 becomes a second temperature or lower when the electric power generation by the fuel cell 3 is resumed, and then the electric power generation is performed for a third period.

It should be noted that Embodiment 6 is the same as Embodiment 3 other than the following point: at the start-up, the electric power generation is performed with the temperature of the fuel cell 3 decreased. Therefore, in Embodiment 6, the same description as in Embodiment 3 is omitted.

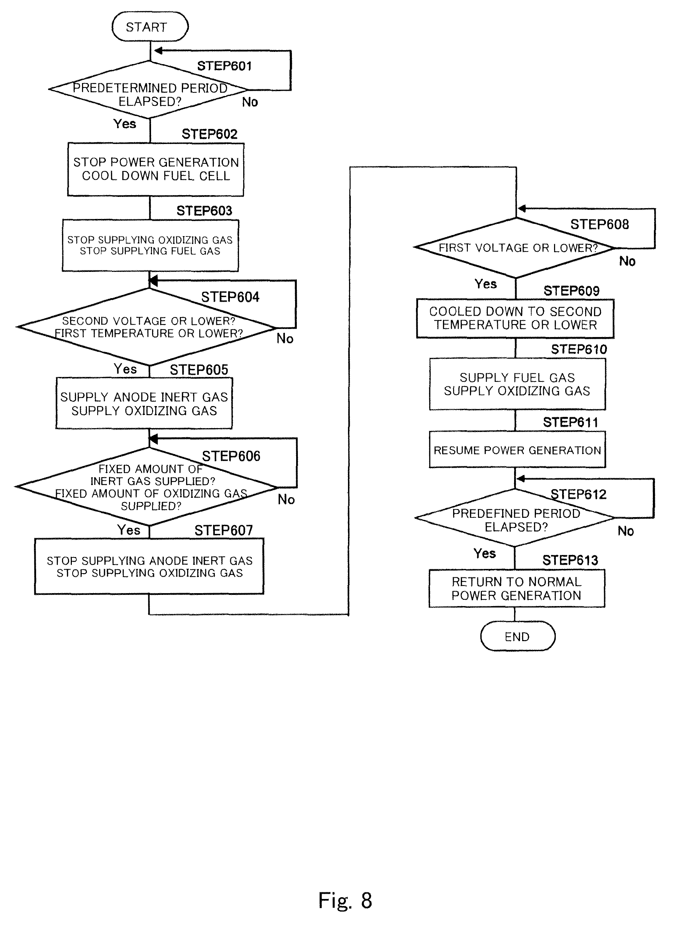

Fig. 8 shows a flowchart for the fuel cell system according to Embodiment 6 of the present invention.

In Embodiment 6, steps from stopping the electric power generation and supplying the inert gas and the oxidizing gas to the anode 2a and the cathode 2b, respectively, to controlling the cell voltage to be the first voltage or lower are the same as those in Embodiment 3. Therefore, the description of these steps is omitted.

When the cell voltage detected by the voltage detector 14 has become the first voltage or lower (step 608), the controller 15 performs, for example, control to increase the speed of the cooling fluid pump 122 of the cooling unit 12, thereby decreasing the temperature of the fuel cell 3 to the second temperature (in a range from the room temperature to approximately 50 °C) or lower (step 609).

The second temperature herein is lower than the dew point of the fuel gas supplied to the anode 2a and the dew point of the oxidizing gas supplied to the cathode 2b, and is a temperature at which condensation water is produced in an amount that is sufficient for washing away impurities adsorbed to the anode 2a and the cathode 2b. The second temperature is preferably lower than the dew point temperature of the anode 2a and the dew point temperature of the cathode 2b by at least 5 °C, and is preferably such a temperature as not to cause flooding. It is preferred that the second temperature is experimentally obtained in advance.

Subsequently, the fuel gas and the oxidizing gas are supplied when the fuel cell 3 is in such a low-temperature state (step 610), and the electric power generation is resumed (step 611).

Then, the electric power generation by the fuel cell 3 in such a low-temperature state continues, and when a predefined period (e.g., the third period (in a range from several minutes to several hours)) has elapsed (step 612), the temperature of the fuel cell 3 is brought back to the same temperature as during normal electric power generation (step 613).

According to the fuel cell system of Embodiment 6 of the present invention with the above-described configuration, the electric power generation at the start-up is performed with the fuel cell 3 in a low-temperature state. Accordingly, the anode 2a and the cathode 2b become excessively humidified and a large amount of condensation water is produced at the anode 2a and the cathode 2b. As a result, contaminants of the anode 2a and the cathode 2b are absorbed into the condensation water and discharged to the outside of the system together with the fuel gas and the oxidizing gas. In this manner, the amount of contaminants can be reduced.

### (Embodiment 7)

A fuel cell system according to Embodiment 7 of the present invention is the same as the fuel cell system according to Embodiment 1 other than the following point: the anode inert gas supply unit 13 supplies the inert gas to the anode 2a via the fuel gas supply unit 10. Therefore, in Embodiment 7, the same description as in Embodiment 1 is omitted.

Fig. 9 shows a schematic configuration of the fuel cell system according to Embodiment 7 of the present invention.

This configuration eliminates the necessity of additionally including components for directly supplying the inert gas to the anode 2a of the fuel cell 3. Accordingly, the fuel cell system is simplified and the cost of the system can be lowered. In addition, since the fuel gas supply unit 10 is purged with the inert gas, degradation due to oxidation of a catalyst used in the fuel gas supply unit 10 can be suppressed and the durability of the fuel cell system can be further improved.

Although a raw material gas is used as the inert gas in Embodiments 1 to 7 of the present invention, the inert gas is not limited to this. The inert gas may be any gas, so long as the gas is different from a reducing gas to be supplied to the anode, has chemical stability, and does not chemically react with the anode when the fuel cell system is in a stopped state. Other than the raw material gas, a nitrogen gas, noble gas, or the like may be used as the inert gas, for example.

In Embodiments 1 to 7 of the present invention, the desulfurizer 101, the raw material gas supply unit 102, and the hydrogen generation unit 103 are collectively used as the fuel gas supply unit 10, and the desulfurizer 101 and the raw material gas supply unit 102 are collectively used as the anode inert gas supply unit 13. However, the configurations of these units are not limited to the above. For example, a hydrogen canister for use in supplying hydrogen may be used as the fuel gas supply unit 10, and an inert gas canister for use in supplying the inert gas may be used as the anode inert gas supply unit 13.

From the standpoint of simplifying the configuration of the fuel cell system and lowering the cost of the fuel cell system, it is preferred to use a raw material gas as the inert gas. A hydrocarbon-containing gas such as methane, propane, butane, or the like may be used as the raw material gas. Examples of such gases include city gas, natural gas, and liquefied propane gas. In a case where the raw material gas to be used contains sulfur components, it is preferred that a desulfurizer is used to reduce the concentration of the sulfur components in the raw material gas and such a desulfurized raw material gas is used.

### Industrial Applicability

As described above, the fuel cell system according to the present invention is applicable to, for example, fuel cells in which a solid polymer electrolyte is used, fuel cell devices, and stationary fuel cell cogeneration systems, which are required to be less susceptible to degradation caused by impurities and have improved durability.

### Reference Signs List

- 2a: anode
- 2b: cathode
- 3: fuel cell
- 10: fuel gas supply unit
- 11: oxidizing gas supply unit
- 12: cooling unit
- 13: anode inert gas supply unit
- 14: voltage detector
- 15: controller

## Claims

1. A fuel cell system comprising:
a fuel cell including an anode and a cathode;
a fuel gas supply unit configured to supply a fuel gas to the anode, the fuel gas containing at least hydrogen;
an oxidizing gas supply unit configured to supply an oxidizing gas to the cathode, the oxidizing gas containing at least oxygen;
an anode inert gas supply unit configured to supply an inert gas to the anode to replace the fuel gas, at least partially, with the inert gas;
a voltage detector configured to detect a cell voltage of the fuel cell; and
a controller configured to control operations of the fuel cell, the fuel gas supply unit, the oxidizing gas supply unit, and the anode inert gas supply unit, wherein
the controller:
performs a stop operation of stopping electric power generation by the fuel cell;
then performs an activity recovery operation of stopping the supply of the fuel gas by the fuel gas supply unit to the anode, causing the anode inert gas supply unit to supply the inert gas to the anode, and causing the oxidizing gas supply unit to supply the oxidizing gas to the cathode; and
performs control such that the fuel gas supply unit resumes supplying the fuel gas to the anode to resume the electric power generation by the fuel cell after the cell voltage of the fuel cell which is detected by the voltage detector has decreased to a first voltage or lower.

2. The fuel cell system according to claim 1, wherein
the controller:
performs the stop operation such that the stop operation includes stopping the electric power generation by the fuel cell, stopping the supply of the oxidizing gas by the oxidizing gas supply unit to the cathode, and stopping the supply of the fuel gas by the fuel gas supply unit to the anode; and
performs control to perform the activity recovery operation after the cell voltage of the fuel cell which is detected by the voltage detector has decreased to a second voltage or lower.

3. The fuel cell system according to claim 1 or claim 2, comprising:
a cooling unit configured to cool the fuel cell; and
a temperature detector configured to detect a temperature of the fuel cell,
wherein
the controller:
performs the stop operation such that the stop operation includes stopping the electric power generation by the fuel cell and controlling the cooling unit to cool the fuel cell; and
performs control to perform the activity recovery operation after the temperature of the fuel cell which is detected by the temperature detector has decreased to a first temperature or lower.

4. The fuel cell system according to claim 3, comprising:
the cooling unit configured to cool the fuel cell; and
the temperature detector configured to detect the temperature of the fuel cell,
wherein
the controller:
performs the stop operation such that the stop operation includes controlling the cooling unit such that the temperature of the fuel cell which is detected by the temperature detector becomes the first temperature or lower, causing the fuel cell to perform the electric power generation for a second period, and then stopping the electric power generation by the fuel cell; and
then performs control to perform the activity recovery operation.

5. The fuel cell system according to any one of claims 1 to 4, comprising:
a cooling unit configured to cool the fuel cell; and
a temperature detector configured to detect a temperature of the fuel cell,
wherein
at a start-up operation of the fuel cell, the controller controls the cooling unit such that the temperature of the fuel cell becomes a second temperature or lower, and performs control such that the fuel cell performs the electric power generation for a third period.

6. The fuel cell system according to any one of claims 1 to 5, wherein the controller performs control to perform the activity recovery operation such that the activity recovery operation includes stopping the supply of the fuel gas by the fuel gas supply unit to the anode, causing the anode inert gas supply unit to supply the inert gas to the anode, and then causing the oxidizing gas supply unit to supply the oxidizing gas to the cathode.

7. The fuel cell system according to any one of claims 1 to 6, wherein
each time a first period has elapsed, the controller performs the stop operation, then performs the activity recovery operation, and thereafter performs control to resume the electric power generation by the fuel cell.

8. The fuel cell system according to claim 7, wherein the first period is controlled by the controller and is a period over which a power generation time cumulative value, which indicates a cumulated power generation time of the fuel cell, reaches a predetermined cumulative power generation time.

9. The fuel cell system according to any one of claims 1 to 8, wherein
the anode inert gas supply unit includes a desulfurizer configured to desulfurize a raw material gas, and
the inert gas is the raw material gas desulfurized by the desulfurizer.

10. The fuel cell system according to any one of claims 1 to 9, wherein the anode inert gas supply unit is configured to supply the inert gas to the anode via the fuel gas supply unit.

11. A method of operating a fuel cell system including a fuel cell including an anode and a cathode, the fuel cell system causing the fuel cell to perform electric power generation by supplying a fuel gas containing at least hydrogen to the anode and supplying an oxidizing gas containing at least oxygen to the cathode, the method comprising:
a stopping step of stopping the electric power generation by the fuel cell;
an activity recovering step of then stopping the supplying of the fuel gas to the anode, supplying the inert gas to the anode, and supplying the oxidizing gas containing at least oxygen to the cathode; and
a resuming step of resuming, after a cell voltage of the fuel cell has decreased to a first voltage or lower, the supplying of the fuel gas to the anode to resume the electric power generation by the fuel cell.

12. The method of operating the fuel cell system according to claim 11, wherein
the stopping step includes stopping the electric power generation by the fuel cell, stopping the supplying of the oxidizing gas to the cathode, and stopping the supplying of the fuel gas to the anode, and
after the stopping step, when the cell voltage of the fuel cell has decreased to a second voltage or lower, the activity recovering step is performed.

13. The method of operating the fuel cell system according to claim 11 or claim 12, wherein
the stopping step includes stopping the electric power generation by the fuel cell and cooling the fuel cell, and
the activity recovering step is performed after a temperature of the fuel cell has decreased to a first temperature or lower.

14. The method of operating the fuel cell system according to claim 13, wherein
the stopping step includes:
cooling the fuel cell such that the temperature of the fuel cell becomes the first temperature or lower; and
causing the fuel cell to perform the electric power generation for the second period, and then stopping the electric power generation by the fuel cell, and
the activity recovering step is performed after the stopping step.

15. The method of operating the fuel cell system according to any one of claims 11 to 14, comprising
at a start-up operation of the fuel cell, cooling the fuel cell such that a temperature of the fuel cell becomes a second temperature or lower and causing the fuel cell to perform the electric power generation for a third period.

16. The method of operating the fuel cell system according to any one of claims 11 to 15, wherein
the activity recovering step includes stopping the supplying of the fuel gas by the fuel gas supply unit to the anode, causing the anode inert gas supply unit to supply the inert gas to the anode, and then causing the oxidizing gas supply unit to supply the oxidizing gas to the cathode.

17. The fuel cell system according to any one of claims 11 to 16, wherein
each time a first period has elapsed, the stopping step is performed, then the activity recovering step is performed, and thereafter the resuming step is performed.

18. The method of operating the fuel cell system according to claim 17, wherein the first period is a period over which a power generation time cumulative value, which indicates a cumulated power generation time of the fuel cell, reaches a predetermined cumulative power generation time.
